# EUROPÄISCHE PATENTSCHRIFT

(11) **EP 1 998 895 B1**
(45) Veröffentlichungstag und Bekanntmachung des Hinweises auf die Patenterteilung: **24.02.2010**
(21) Anmeldenummer: 07726899.3
(22) Anmeldetag: 14.03.2007
(51) Int. Cl.: B02C 4/30

(54) **Verfahren zum Zerkleinern von grobteilig gebrochenem polykristallinem Silicium**
Method for comminuting coarsly crushed polycrystalline silicon
Procédé de fragmentation de silicium polycristalline broyé grossièrement

(30) Priorität: 30.03.2006 DE 102006014874
(43) Veröffentlichungstag der Anmeldung: 10.12.2008
(73) Patentinhaber: Wacker Chemie AG, 81737 München (DE)
(72) Erfinder: GRÜBL, Peter, 84371 Triftern (DE); HÖLZLWIMMER, Rainer, 84524 Neuötting (DE)
(74) Vertreter: Potten, Holger
(86) Internationale Anmeldenummer: PCT/EP2007/052408
(87) Internationale Veröffentlichungsnummer: WO 2007/113087

(56) Entgegenhaltungen:
- DE-A1- 3 811 091
- DE-A1- 19 709 263
- GB-A- 2 025 260
- JP-A- 57 067 019
- US-A- 4 617 709

## Beschreibung

Die Erfindung betrifft ein Verfahren zum Zerkleinern von grobteilig gebrochenem polykristallinem Silicium in einer Reinheit, die direkt, d.h. ohne Nachreinigung, für photovoltaische Anwendungen eingesetzt werden kann.

Polykristallines Silicium (Polysilicium) wird üblicherweise hergestellt durch Gasphasenabscheidung in einem Siemens-Reaktor. Dabei werden hochreines Silan oder Chlorsilan auf einem heißen Substrat (bevorzugt aus Silicium) abgeschieden, so dass massive Stäbe, Blöcke oder Bretter erhalten werden. Bevor man dieses Polysilicium in Kristallisationsverfahren verwenden kann, muss man es zerkleinern. Dabei wird es üblicherweise so durch Abrieb kontaminiert, dass man durch Reinigungsverfahren die Verunreinigungen auf der Oberfläche entfernen muss.

In den Kristallisationsverfahren direkt (d.h. ohne Nachreinigung) verwendbares solartaugliches, d.h. sehr reines (metallische Gesamtkontamination typischerweise < 10 ppba), Polysilicium kann bislang nur durch aufwendige und personalintensive Handzerkleinerung gewonnen werden. In einem ersten Schritt wird ein Siliciumstab, wie er aus einem Siemens Abscheidereaktor erhalten wird, mit einem Handhammer vorgebrochen und anschließend mit einem Niethammer händisch auf die erforderliche Bruchgröße nachzerkleinert. Dieser manuell erzeugte Grobbruch kann als Aufgabematerial weiter maschinell zerkleinert werden.

Bisher beschriebene mechanische Brechverfahren, die geeignet sind, grobteilig gebrochenes polykristallines Polysilicium zu zerkleinern, z. B. übliche Backenbrecher oder Walzenbrecher, verursachen entweder eine zu hohe metallische Oberflächenkontamination (herkömmliche Backenbrecher ca. 500 - 1000 parts per billion atoms (ppba), herkömmliche Walzenbrecher ca. 200 - 500 ppba) was eine aufwendige Nachreinigung erfordert oder sind durch sehr aufwändige Maschinenausführung bzw. aufwändige Verfahren (z. B. Schockwellenzerkleinerung oder thermisches Brechen) unwirtschaftlich.

Beim Einsatz von Walzenbrechern ist die geeignete Größe des Aufgabematerials vom Einzugswinkel und somit von der Dimensionierung der Brechmaschine abhängig. Aufgrund der Walzengeometrie können bisher nur Bruchstücke mit einer maximalen Kantenlänge < 110 mm eingezogen werden. Zusätzlich sind für die Herstellung feinteiliger Produkte mehrere Brechzyklen notwendig. Aus fertigungstechnischen Gründen kommen Walzenbrecher mit Hartmetall-Brechwerkzeugen bisher nur mit einem Walzendurchmesser von 450 mm zum Einsatz. Ferner ist die Walzenwartung ein zusätzlicher Kostenfaktor. Aufgrund der technischen Ausführung der Hartmetall-Walzen ist der Austausch oder Ersatz der Walzen sehr zeit- und auch kostenintensiv.

Verfahren zum Zerkleinern von Silicium sind z.B. aus DE-A-38 11 091 und aus JP-A-57 067 019 bekannt.

Aufgabe der Erfindung ist es, ein Verfahren zum Zerkleinern von grobstückigem Polysilicium zur Verfügung zu stellen, das in der Lage ist, grobteilig gebrochenes polykristallines Silicium kostengünstig und kontaminationsarm zu zerkleinern.

Die Aufgabe wird gelöst durch ein Verfahren, bei dem das Polysilcium mittels eines Walzenbrechers umfassend eine Walze, welche sich mit einer Welle (3) dreht, zerkleinert wird, wobei die Walze aus einer Trägerwalze (2) aus Stahl und aus mehreren Hartmetall-Segmenten (1) besteht, wobei die Hartmetall-Segmente (1) aus einer Cobaltmatrix, in die Wolframcarbid eingelagert ist, bestehen und die Hartmetall-Segmente (1) formschlüssig reversibel auf der Trägerwalze (2) befestigt sind.

Durch den segmentierten Aufbau aus mehreren Hartmetall-Segmenten weist die Walze sowie der mit der Walze versehene Walzenbrecher eine hohe Wartungsfreundlichkeit auf, denn die Hartmetall Segmente können ohne Demontage der Walze einzeln ausgebaut und gewechselt werden. Vorzugsweise handelt es sich um 8 bis 16, besonders bevorzugt um 12 Hartmetall-Segmente.

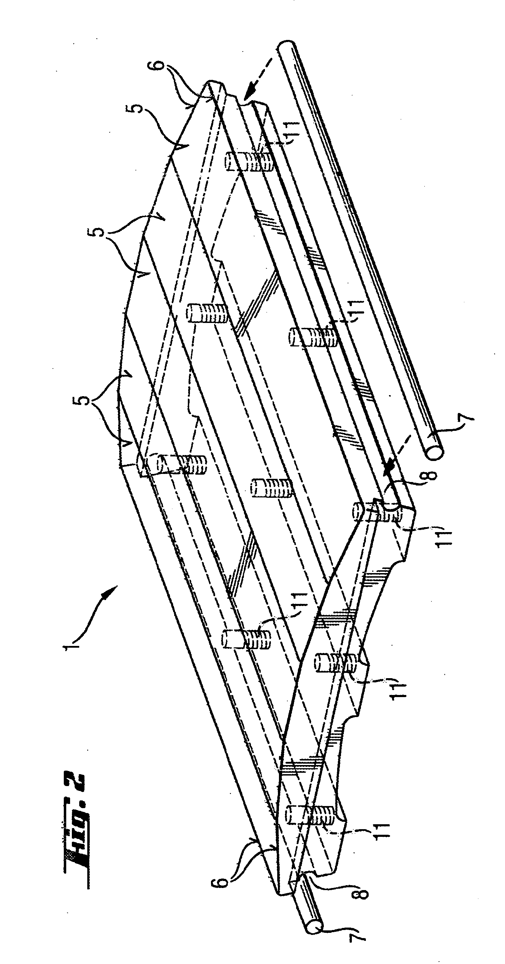

Ein Hartmetall-Segment besteht vorzugsweise zu mehr als 80 Gew.%, besonders bevorzugt zu mehr als 90 Gew.%, insbesondere bevorzugt zu 91,5 Gew.% aus Wolframcarbid, das in eine Cobaltmatrix eingelagert ist. Das Hartmetall-Segment ist an seiner einen Teil der Mantelfläche der Walze bildenden Oberfläche vorzugsweise mit einem Facettenschliff versehen. Die Facetten wirken wie Einzugsleisten auf dem Walzenmantel und verbessern das Einzugsverhalten des Brechguts. Vorzugsweise besitzt jedes Hartmetall-Segment 3 - 12 Facetten, besonders bevorzugt 4 - 7 Facetten, insbesondere bevorzugt 5 Facetten (5) (Fig. 2). Alle Kanten des Hartmetall-Segments sind vorzugsweise mit einem Radius (6) (Fig. 2) ausgeführt, um Kantenausbrüche an dem Hartmetall-Segment zu vermeiden. Vorzugsweise ist der Radius gegen Kantenausbrüche von 2 mm bis 5 mm zu wählen.

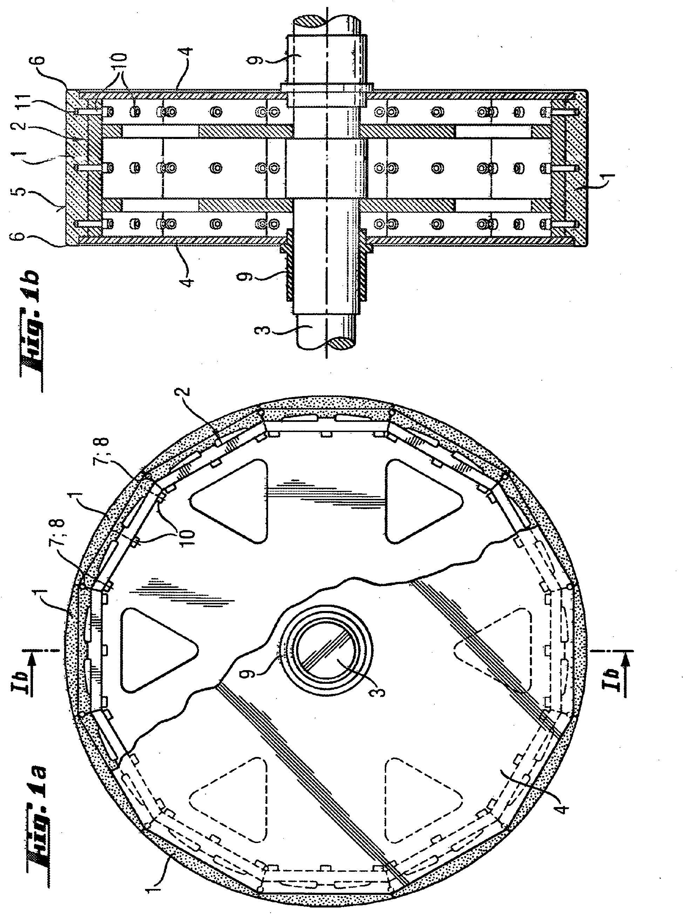

Vorzugsweise sind die Hartmetall-Segmente gegeneinander mit einem hochreinen Kunststoff (7) abgedichtet, der in die Nut (8) zwischen den Segmenten (1) eingebracht ist. Vorzugsweise wird die gesamte Walze ferner stirnseitig mit Platten (4) aus hochreinem Kunststoff verkleidet. Auch die Welle (3), die sich mit der Walze dreht, wird vorzugsweise mit einem Formteil (9) aus einem hochreinen Kunststoff verkleidet. Durch die Verkleidung der Welle (3), die stirnseitige Abdichtung des Walzenträgers sowie die Abdichtung zwischen den einzelnen Hartmetall-Segmenten, wird eine Kontamination des Bruchgutes mit jeglichen Metallkontaminationen verhindert. Besonders bevorzugt sind die Platten 4 um mindestens 2 mm versetzt zu den Stirnseiten der Hartmetall-Segmente (1) angebracht, um den Abrieb am Kunststoff durch das Bruchgut zu vermeiden (Fig. 1b).

Als hochreiner Kunststoff wird vorzugsweise Polyethylen, Polypropylen, Polytetrafluorethylen, Polyurethan, Ethylen-Tetrafluorethylen-Copolymer, Perfluoralkoxy-Copolymer oder Halar® verwendet. Besonders bevorzugt wird Polyurethan verwendet.

Vorzugsweise sind die Hartmetall-Segmente (1) mittels Schrauben (10) auf der Trägerwalze (2) befestigt, wobei besonders bevorzugt gesinterte Innengewinde (11) in die Hartmetall-Segmente (1) zur Befestigung dienen. Besonders bevorzugt sind die Innengewinde als Sacklochgewinde ausgeführt, um eine Kontamination des Brechgutes mit Stahl zu vermelden. Dieser Aufbau der walze ermöglicht es, im Reparaturfall nur das beschädigte aufgeschraubte Hartmetall-Segment zu wechseln.

Vorzugsweise weist der Walzenbrecher zwei Walzen auf. Vorzugsweise haben die Walzen einen Durchmesser von 1000 bis 2000 mm.

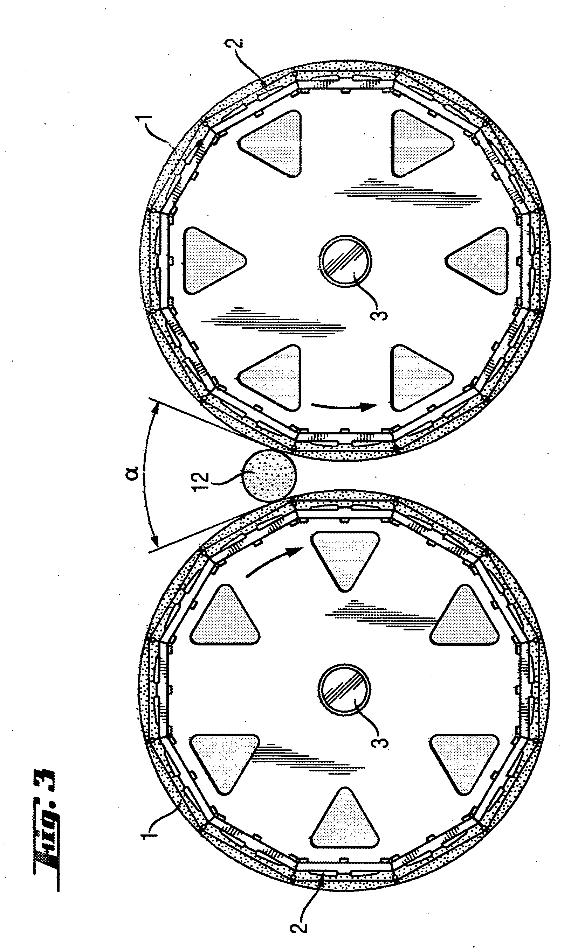

Die Walzen sind im Walzenbrecher vorzugsweise so zueinander angeordnet, dass der Brechwinkel α einen Wert von 40° bis 45° hat. Unter dem "Brechwinkel" ist im Sinne der vorliegenden Erfindung der Winkel zwischen den Tangenten an den Hartmetall-Segmenten im Berührpunkt des Zerkleinerungsgutes (12) zu Beginn des Brechvorganges zu verstehen (siehe Fig. 3).

Vorzugsweise haben die Walzen für ein Aufgabegut von einer maximalen Kantenlänge von 100 mm bis 250 mm einen Durchmesser von 1000 mm bis 2000 mm. Besonders bevorzugt haben die Walzen für ein Aufgabegut von einer maximalen Kantenlänge von 180 mm bis 220 mm einen Durchmesser von 1300 mm bis 1700 mm. Diese Walzendimensionierung begünstigt den Einzug der Polysilicium-Bruchstücke. Aufgrund der Dimension der Walzen und deren Ausführung entstehen beim Brechen geringere Kräfte, so dass die eingebrachte Energie effizienter auf das Aufgabegut übertragen werden kann. Der erfindungsgemäße Walzenbrecher weist durch die Dimensionierung seiner Walzen daher ein großes Brechverhältnis auf, was die Anzahl der Durchläufe zur Zerkleinerung des Brechgutes vermindert und somit die verunreinigungsarme Zerkleinerung von polykristallinem Silicium vereinfacht. Das Brechverhältnis ist dabei definiert als das Verhältnis der maximalen Kantenlänge des Aufgabegutes zur maximalen Kantenlänge des Produkts.

Aufgrund der genannten Geometrie, sowie des im Vergleich zum Stand der Technik günstigeren Einzugswinkels ist die zu erzeugende Bruchgröße über einen größeren Bereich einstellbar. Die Reproduzierbarkeit der Bruchgrößenverteilung ist ebenfalls gegeben.

Das erfindungsgemäße Verfahren ermöglicht die Zerkleinerung eines Polysilicium-Aufgabeguts mit einer Größe von bis zu 250 mm Kantenlänge. Vorzugsweise ist das Aufgabegut ein solartauglicher Polysilicium-Bruch mit einer Kantenlänge von 80 - 200 mm. Dadurch, dass derart große Bruchstücke als Aufgabegut geeignet sind, kann die manuelle Vorzerkleinerung auf einen Arbeitsschritt reduziert werden, die weiteren manuellen Brechschritte können entfallen.

Im erfindungsgemäßen Verfahren ist die erzeugte mittlere Bruchgröße des Produktes über einen Bereich von 10 mm - 150 mm frei einstellbar. Die Bruchgröße des Produktes wird dabei über die Größe des Brechspalts zwischen den Walzen definiert. Für eine Bruchgröße von 60 bis 110 mm hat der Brechspalt vorzugsweise eine Größe von 45 bis 55 mm. Eine reproduzierbare Bruchgrößenverteilung ist bei allen Spalteinstellungen sichergestellt. Dies ist mit einem manuellen Zerkleinerungsverfahren nicht möglich.

Versuche haben gezeigt, dass ein Spalt von 50 mm am Walzenbrecher sowie ein Aufgabematerial mit einer maximalen Kantenlänge von 150 mm bei 1000 mm Walzendurchmesser ähnliche Längenverteilung und Gewichtsverteilung wie beim derzeitigen händischen Brechverfahren liefern. Zusätzlich ist hier jedoch die Reproduzierbarkeit des Prozesses gegeben.

Das erfindungsgemäße Verfahren ist vorzugsweise dadurch gekennzeichnet, dass ein Polysilicium-Bruch einer mittleren Bruchgröße von 80 bis 250 mm auf einen erfindungsgemäßen Brecher aufgegeben wird und in einem Durchlauf mit einem Brechverhältnis größer 5 auf eine jeweilige erwünschte Zielgröße gebrochen wird.

Während ein herkömmliches Verfahren zur Zerkleinerung eines im Siemensverfahren gewonnenen Polysiliciumstabes zu einem Polybruch einer Kantenlänge von 15 mm zunächst zwei Brechschritte mittels einer manuellen Zerkleinerung (händisches Vorzerkleinern auf eine maximale Bruchgröße von ca. 120 - 150 mm und anschließendes händisches Nachzerkleinern auf eine maximale Bruchgröße von ca. 80 - 110 mm) sowie anschließend 3 bis 4 Brechschritte mittels herkömmlicher Brecher und damit also insgesamt 5 bis 6 Brechschritte umfasst, ermöglicht ein erfindungsgemäßer Walzenbrecher ein Verfahren, welches in 2 bis 3 Brechschritten (Händischen Vorzerkleinerung auf eine Bruchgröße von ca. 200 - 250 mm und ein oder zwei Durchläufen auf dem erfindungsgemäßen Walzenbrecher) das gleiche Ergebnis erzielt.

Die erwünschte Zielgröße ist vorzugsweise 65 bis 100 mm.

Die Korngrößenverteilung des erfindungsgemäß hergestellten Siliziumbruches ist vergleichbar der Korngrößenverteilung eines mit händischen Verfahren hergestellten Bruchs, wobei jedoch zusätzlich eine Reproduzierbarkeit der Korngrößenverteilung im erfindungsgemäßen Verfahren gegeben ist. Durch eine Änderung des Spaltabstandes zwischen den Walzen lässt sich gezielt die mittlere Bruchgröße des erzeugten Polybruchs einstellen. Diese ist bei allen Spalteinstellungen reproduzierbar.

Das Verfahren ermöglicht somit das Einhalten eines reproduzierbaren Zerkleinerungsverhältnisses.

Die Durchsatzleistung des erfindungsgemäßen Verfahrens ist gegenüber der mehrfachen händischen Zerkleinerung um ca, den Faktor 5 erhöht. Die Durchsatzleistung eines erfindungsgemäßen Brechers für das beschriebene Aufgabematerial beträgt ca. 10 t/h.

Im Gegensatz zum händischen Nachzerkleinern muss das Silicium im erfindungsgemäßen Verfahren nicht mit der Hand fixiert werden. Es kommt somit nicht mehr zum Eintrag von Natrium, Eisen, Aluminium und PU in das Brechgut.

Ein Vergleich der Verunreinigungen des zerkleinerten Produktes nach erfindungsgemäßem maschinellen Brechen und herkömmlichen händischen Brechen zeigt deutlich die Vorteile des erfindungsgemäßen Verfahrens:

Die Verunreinigung durch Natrium ist um den Faktor 50 niedriger, die Verunreinigung durch Wolfram um den Faktor 2, durch Kobalt um den Faktor 3 - 4 und durch Eisen um den Faktor 7 bis 8. Neben einem verringerten Eintrag von Verunreinigungen in das Polysilicium ist auch eine möglichst geringe Streuung des Verunreinigungsgrades für einen reproduzierbaren Prozess wünschenswert, da sich dies sehr stark auf die Qualität des hergestellten Siliciums auswirkt. Im erfindungsgemäßen Verfahren ist die Streuung bei den genannten Metallen um den Faktor 4 - 6 niedriger als bei herkömmlichen Verfahren. Bei Natrium ist die Streuung sogar um den Faktor 20 niedriger. Eine Nachreinigung des Produktes ist daher nicht notwendig.
Mittels des erfindungsgemäßen Verfahrens lässt sich somit ein hochreiner Polysilicium-Bruch mit engerer Streubreite von Verunreinigungen sowie eine größere reproduzierbare Produktvielfalt herstellen als mittels händischer Verfahren, ohne dass dadurch erhöhte Kosten entstehen, wie mittels bekannter maschineller Verfahren.
Fig. 1a und 1b zeigen schematisch eine bevorzugte Ausführungsform einer Walze eines erfindungsgemäßen Walzenbrechers in Seitenansicht und im Schnitt.
Fig. 2 zeigt perspektivisch ein Hartmetall-Segment einer Walze eines erfindungsgemäßen Walzenbrechers.
Fig. 3 zeigt schematisch einen Walzenbrecher mit zwei Walzen und definiert den Brechwinkel α.

Das folgende Beispiel dient zur weiteren Erläuterung der Erfindung:
Beispiel: Vergleich eines Brechverfahrens mit einem herkömmlichen mit einem Brechverfahrens mit einem erfindungsgemäßen Brecher
   a) Herkömmliches Verfahren: Siliciumstäbe mit einem Durchmesser von ca. 180 mm wurden im ersten manuellen Brechschritt zu ca. 200 mm großen Bruchstücken vorgebrochen. Anschließend wurden diese Bruchstücke händisch im zweiten Brechschritte auf eine maximale Kantenlänge von 110 mm gebrochen. Dieses Ausgangsmaterial wurde dann mittels eines Walzenbrechers mit einem Walzendurchmesser von 450 mm in vier Durchläufen zerkleinert und mit verschiedenen Spaltweiten auf eine Kantenlänge von 8 mm - 15 mm gebrochen. Zur Herstellung des spezifischen Produktes waren somit 2 händische Arbeitsschritte und zusätzlich noch 4 maschinelle Arbeitsschritte notwendig.
   b) Erfindungsgemäßes Verfahren: Siliciumstäbe mit einem Durchmesser von ca. 180 mm wurden im ersten manuellen Brechschritt auf ca. 200 mm großen Bruchstücken vorgebrochen. Diese Bruchstücke mit einer maximalen Kantenlänge von 200 mm wurden direkt als Aufgabematerial auf einen erfindungsgemäßen Walzenbrecher wie in Fig. 1 dargestellt mit einem Walzendurchmesser von 2000 mm aufgegeben. Mit einer Spaltweite von 40 mm wurde ein erster maschineller Brechschritt durchgeführt. Anschließend wurde auf dem gleichen Brecher mit einer Spaltweite von 8 mm nochmals ein Brechschritt durchgeführt. Dadurch wurde das gleiche Produkt wie in a) erhalten.

Mit dem erfindungsgemäßen Verfahren lässt sich bei gleichem Aufgabematerial in nur zwei Brechschritten ein Produkt erzeugen, welches mit einem herkömmlichen Brecher in 6 Schritten erzeugt wurde. Zudem zeigte das erfindungsgemäße Verfahren bei mehrfacher Wiederholung eine geringere Verunreinigung mit Fe, Na, Al, W und Co sowie eine geringere Streuung der Kontamination.

## Patentansprüche

1. Verfahren zum Zerkleinern von grobstückigem Polysilicium, **dadurch gekennzeichnet, dass** das grobstückige Polysilicium mittels eines Walzenbrechers umfassend eine Walze, welche sich mit einer Welle (3) dreht, zerkleinert wird, wobei die Walze aus einer Trägerwalze (2) aus Stahl und aus mehreren Hartmetall-Segmenten (1) bestehen, wobei die Hartmetall-Segmente (1) aus einer Cobaltmatrix, in die Wolframcarbid eingelagert ist, bestehen und die Hartmetall-Segmente (1) formschlüssig reversibel auf der Trägerwalze (2) befestigt sind.

2. Verfahren gemäß Anspruch 1, **dadurch gekennzeichnet, dass** die Walze aus einer Trägerwalze aus Stahl und aus 8 bis 16, besonders bevorzugt 12 Hartmetall-Segmenten besteht.

3. Verfahren gemäß Anspruch 1 oder 2, **dadurch gekennzeichnet, dass** die Hartmetall-Segmente zu mehr als 80 Gew.%, besonders bevorzugt zu mehr als 90 Gew.%, insbesondere bevorzugt zu 91,5 Gew.% aus Wolframcarbid bestehen, das in die Cobaltmatrix eingelagert ist.

4. Verfahren gemäß Anspruch 1, 2 oder 3, **dadurch gekennzeichnet, dass** die Hartmetall-Segmente an ihrer einen Teil der Mantelfläche der Walze bildenden Oberfläche mit einem Facettenschliff versehen sind.

5. Verfahren gemäß einem der Ansprüche 1, 2, 3 oder 4, **dadurch gekennzeichnet, dass** die Hartmetall-Segmente gegeneinander mit einem hochreinen Kunststoff abgedichtet sind, der in die Nut zwischen den Segmenten eingebracht ist.

6. Verfahren gemäß einem der Ansprüche 1 bis 5, **dadurch gekennzeichnet, dass** die Walze stirnseitig mit Platten aus einem hochreinen Kunststoff verkleidet ist.

7. Verfahren gemäß einem der Ansprüche 1 bis 6, **dadurch gekennzeichnet, dass** die Hartmetall-Segmente mittels Schrauben auf der Trägerwalze befestigt sind, wobei in die Hartmetall-Segmente Innengewinde zur Befestigung der Schrauben eingesintert sind.

8. Verfahren gemäß einem der Ansprüche 1 bis 7, **dadurch gekennzeichnet, dass** die Walze einen Durchmesser von 1000 bis 2000 mm hat.

9. Verfahren gemäß einem der Ansprüche 1 bis 8, **dadurch gekennzeichnet, dass** ein Polysilicium-Bruch einer mittleren Bruchgröße von 80 bis 250 mm auf einen Brecher wie in einem der Ansprüche 1 bis 8 genannt aufgegeben wird und in einem Durchlauf mit einem Zerkleinerungsverhältnis größer 5 auf eine jeweilige erwünschte Zielgröße gebrochen wird.

## Claims

1. Method for comminuting coarse polysilicon, **characterized in that** the coarse polysilicon is comminuted by means of a roll crusher comprising a roll which rotates with a shaft (3), wherein the roll comprises a carrier roll (2) of steel and a number of hard-metal segments (1), wherein the hard-metal segments (1) consist of a cobalt matrix in which tungsten carbide is incorporated, and the hard-metal segments (1) are fastened on the carrier roll (2) reversibly with a form fit.

2. Method according to Claim 1, **characterized in that** the roll comprises a carrier roll of steel and 8 to 16, particularly preferably 12, hard-metal segments.

3. Method according to Claim 1 or 2, **characterized in that** the hard-metal segments consist of over 80% by weight, particularly preferably over 90% by weight, especially preferably 91.5% by weight, tungsten carbide, which is incorporated in the cobalt matrix.

4. Method according to Claim 1, 2 or 3, **characterized in that** the hard-metal segments are provided on their surface that forms part of the circumferential surface of the roll with a faceted finish.

5. Method according to one of Claims 1, 2, 3 or 4, **characterized in that** the hard-metal segments are sealed from one another with a very pure plastic, which is introduced into the groove between the segments.

6. Method according to one of the Claims 1 to 5, **characterized in that** the roll is clad at the end faces with plates of very pure plastic.

7. Method according to one of Claims 1 to 6,
**characterized in that** the hard-metal segments are fastened on the carrier roll by means of screws, wherein internal threads for fastening the screws are sintered into the hard-metal segments.

8. Method according to one of Claims 1 to 7,
**characterized in that** the roll has a diameter of from 1000 to 2000 mm.

9. Method according to one of Claims 1 to 8,
**characterized in that** a crushed polysilicon material with an average fragment size of from 80 to 250 mm is fed to a crusher as specified in one of Claims 1 to 8 and crushed to a respective desired target size in one pass with a crushing ratio greater than 5.

## Revendications

1. Procédé pour réduire du polysilicium grossier, **caractérisé en ce que** le polysilicium grossier est réduit au moyen d'un concasseur à cylindre, comprenant un cylindre qui tourne avec un arbre (3), le cylindre étant constitué par un cylindre support (2) en acier et par plusieurs segments en métal dur (1), les segments en métal dur (1) étant constitués par une matrice de cobalt, dans laquelle est incorporé du carbure de tungstène et les segments de métal dur (1) étant fixés de manière mécaniquement réversible sur le cylindre support (2).

2. Procédé selon la revendication 1, **caractérisé en ce que** le cylindre est constitué par un cylindre support en acier et par 8 à 16, de manière particulièrement préférée 12 segments en métal dur.

3. Procédé selon la revendication 1 ou 2, **caractérisé en ce que** les segments en métal dur sont constitués par plus de 80% en poids, de manière particulièrement préférée par plus de 90% en poids, en particulier de préférence par 91,5% en poids de carbure de tungstène, qui est incorporé dans la matrice de cobalt.

4. Procédé selon la revendication 1, 2 ou 3,
**caractérisé en ce que** les segments en métal dur sont pourvus d'un meulage à facettes sur leur surface formant une partie de la surface enveloppante du cylindre.

5. Procédé selon l'une quelconque des revendications 1, 2, 3 ou 4, **caractérisé en ce que** les segments en métal dur sont étanchéifiés l'un par rapport à l'autre avec du matériau synthétique de pureté élevée, qui est introduit dans la rainure entre les segments.

6. Procédé selon l'une quelconque des revendications 1 à 5, **caractérisé en ce que** le cylindre est revêtu sur ses faces frontales par des plaques en un matériau synthétique de pureté élevée.

7. Procédé selon l'une quelconque des revendications 1 à 6, **caractérisé en ce que** les segments en métal dur sont fixés au moyen de vis sur le cylindre support, des filetages internes pour la fixation des vis étant frittés dans les segments en métal dur.

8. Procédé selon l'une quelconque des revendications 1 à 7, **caractérisé en ce que** le cylindre présente un diamètre de 1000 à 2000 mm.

9. Procédé selon l'une quelconque des revendications 1 à 8, **caractérisé en ce qu'**une fraction de polysilicium d'une grosseur moyenne de 80 à 250 mm est introduite sur un concasseur tel que mentionné dans l'une quelconque des revendications 1 à 8 et est concassée en un passage avec un rapport de réduction supérieur à 5 à une grosseur cible souhaitée respective.
